# FASCICULE DE BREVET EUROPEEN

(11) **EP 2 718 673 B1**
(45) Date de publication et mention de la délivrance du brevet: **27.04.2016**
(21) Numéro de dépôt: 12729687.9
(22) Date de dépôt: 01.06.2012
(51) Int. Cl.: G01D 4/00

(54) **PROCEDE D'ANALYSE DE LA CONSOMMATION D'ELECTRICITE D'UN SITE EQUIPE D'UNE PLURALITE D'EQUIPEMENTS ELECTRIQUES**
VERFAHREN ZUM ANALYSIEREN DES STROMVERBRAUCHS EINER ANLAGE MIT MEHREREN ELEKTRISCHEN GERÄTEN
METHOD FOR ANALYSING THE ELECTRICITY CONSUMPTION OF A SITE COMPRISING A PLURALITY OF ELECTRICAL EQUIPMENTS

(30) Priorité: 08.06.2011 FR 1101745
(43) Date de publication de la demande: 16.04.2014
(73) Titulaire: Smart Impulse, 92295 Chatenay-Malabry Cedex (FR)
(72) Inventeur: RICHE, Didier, F-92150 Suresnes (FR); EL RAMI, Nadim, Fanar, Metn (LB); TOURIN-LEBRET, Dorian, F-92330 Sceaux (FR)
(74) Mandataire: IP Trust
(86) Numéro de dépôt international: PCT/FR2012/051230
(87) Numéro de publication internationale: WO 2012/168629

(56) Documents cités:
- WO-A1-97/25625
- WO-A2-2011/035301
- US-A1- 2010 070 217
- US-A1- 2010 280 978
- US-A1- 2011 095 608
- US-A1- 2011 098 867
- US-A1- 2011 112 780
- JIAN LIANG ET AL: "Load Signature Studyâ Part I: Basic Concept, Structure, and Methodology", IEEE TRANSACTIONS ON POWER DELIVERY, IEEE SERVICE CENTER, NEW YORK, NY, US, vol. 25, no. 2, 1 avril 2010 (2010-04-01), pages 551-560, XP011297458, ISSN: 0885-8977

## Description

### Domaine de l'invention

La présente invention concerne le domaine de l'analyse de la consommation électrique d'un site résidentiel, tertiaire ou industriel non intrusive, c'est-à-dire ne nécessitant pas la mise en place de capteurs associés à chacun des équipements à superviser ni la coupure de l'alimentation électrique de l'installation. Cette analyse permet notamment d'identifier les principaux leviers d'économie d'énergie.

### Etat de la technique

On connaît dans l'état de la technique différentes solutions consistant à acquérir des informations sur les facteurs de forme du courant et/ou de la tension d'alimentation en amont du site et à déduire des informations sur la consommation individuelle de chacun des équipements électriques.

Une première famille de solutions consiste à observer les variations temporelles de la courbe de charge et à identifier des signatures comparées avec des signatures de référence enregistrées pour les principaux équipements.

En particulier, la demande de brevet européen EP2000780 décrit un procédé de détection et d'estimation de la consommation des usages électriques des installations d'un souscripteur, caractérisé en ce qu'il consiste au moins à :
- établir la courbe de consommation électrique générale des installations du souscripteur, l'étape consistant à établir la courbe de consommation générale des installations du souscripteur incluant au moins : l'échantillonnage de la consommation des effluents consommés par les installations du souscripteur, ledit échantillonnage intervenant en aval du compteur de consommation d'effluent relié au branchement au réseau général ;
- effectuer, par segmentation de la courbe de consommation générale des installations du souscripteur et par suivi des évènements de consommation électrique en régime transitoire, la reconnaissance des usages électriques et estimer leur consommation correspondante.

On connaît également la demande de brevet international WO 2010106253 décrivant un procédé d'analyse de la consommation électrique d'une pluralité d'appareils électriques fonctionnant sur un site de consommation, par filtrage d'une courbe de charge représentant la consommation électrique desdits appareils en fonction du temps, caractérisé en ce qu'il comporte les étapes suivantes :
- préalablement au filtrage proprement dit de la courbe de charge :
- enregistrer et numériser la courbe de charge, de façon à obtenir une courbe de charge numérisée par périodes de temps;
- définir un ensemble de classes d'appareils, chaque classe étant définie par des cycles similaires de variation de puissance ;
- définir pour chaque classe d'appareils, un algorithme de filtrage de la courbe de charge dédié à ladite classe d'appareils, ledit algorithme étant apte à extraire des cycles de variation de puissance de la courbe de charge numérisée, et à l'allouer à ladite classe d'appareils ;
- puis pendant le filtrage proprement dit de la courbe de charge numérisée, utiliser successivement les algorithmes de filtrage dédiés à chaque classe d'appareils, pour identifier et regrouper à partir de la courbe de charge numérisée, les cycles de variations de puissance consommée par les appareils électriques.

Une deuxième famille de solutions consiste à prendre en compte non pas la variation temporelle de la puissance mesurée en amont de l'installation, mais à prendre en compte la forme d'onde du courant consommé par chacun des équipements.

En particulier, la demande de brevet international WO2011012840 concerne un procédé d'identification du fonctionnement d'un appareil électrique, par exemple un moteur à induction. Le procédé comprend l'identification du fonctionnement d'un appareil électrique lorsqu'un trajet tracé par des valeurs de puissance réelle par rapport à des valeurs de puissance virtuelle correspondantes sur une période particulière comprend un ou plusieurs arcs sensiblement circulaires. Les valeurs de puissance réelle sont associées à la puissance réelle totale fournie à un ou plusieurs appareils électriques en fonction du temps, et les valeurs de puissance virtuelle sont associées à la puissance virtuelle totale fournie à un ou plusieurs appareils électriques en fonction du temps. L'invention concerne également un procédé associé d'identification du fonctionnement d'un type d'appareil spécifié, dans lequel le fonctionnement dudit type d'appareil spécifié dépend de la fourniture d'au moins une source d'énergie, comme l'électricité, le gaz naturel, ou l'eau. L'invention concerne également des programmes informatiques, des supports pouvant être lus par ordinateur et des produits et appareils de programme informatique correspondants.

On connaît également le brevet européen 1296147 décrivant un procédé pour estimer la consommation d'électricité individuelle d'une pluralité d'appareils électriques consistant à :
- créer un modèle pour estimer la consommation d'électricité de chacun des appareils électriques à partir des relations entre les données concernant des harmoniques fondamentales et supérieures de courant de pleine charge et leurs différences de phase de tension à partir du courant de pleine charge et de la tension obtenus à partir de combinaisons de différents états d'utilisation d'une pluralité d'appareils électriques et la consommation électriques utilisées pour obtenir lesdites données
- et obtenir la consommation d'électricité d'appareils individuels en fonctionnement en utilisant ledit modèle pour estimer la consommation de chaque appareil à partir desdites harmoniques fondamentales et supérieures dudit courant de pleine charge et de leurs dites différences de phase de tension obtenues à partir dudit courant de pleine charge et de la tension mesurés dans un voisinage d'une entrée de service.

### Inconvénients de l'état de la technique.

Les procédés consistant à observer les variations temporelles de la courbe de charge et à identifier des signatures comparées avec des signatures de référence enregistrées pour les principaux équipements ne sont pas adaptés à l'analyse de sites comportant un nombre important d'équipements. En effet, la périodicité des acquisitions est de l'ordre de la seconde. Lorsque plusieurs équipements s'arrêtent ou démarrent avec un décalage temporel faible, inférieure à la périodicité d'acquisition, il se produit un phénomène de masquage qui empêche une reconnaissance pertinente des équipements en question.

Par ailleurs, le procédé ne prend en compte que les transitoires (allumage/arrêt), et ne permet pas de prendre en compte des équipements en fonctionnement permanent.

Ces problèmes ont conduit à développer la deuxième famille de solutions, basée sur l'analyse des formes d'onde.

Le problème technique que pose ces procédés est celui de la robustesse des traitements. En effet, ces procédés sont basés sur la caractérisation d'un équipement par une signature enregistrée dans une situation particulière. Lorsque l'équipement est utilisé sur un site, cette signature est légèrement perturbée, notamment par la qualité de la tension d'alimentation. Il est donc nécessaire de prévoir une marge d'erreur pour permettre la détection effective des équipements. Cette marge d'erreur conduit néanmoins à un risque de confusion entre équipements distincts, mais caractérisés chacun par des signatures proches.

Ce problème interdit la possibilité d'une base de données universelle et nécessite une modélisation pour chaque site.

### Solution apportée par l'invention

La présente invention vise à apporter une solution technique aux problèmes posés par les procédés d'analyse de l'état de la technique.

A cet effet, l'invention concerne, selon son acception la plus générale, un procédé d'analyse de la consommation d'électricité d'un site équipé d'une pluralité d'équipements électriques de natures différentes, consistant à mesurer périodiquement le courant et la tension sur au moins une des phases électriques en amont du réseau d'alimentation du site, à appliquer sur une combinaison des signaux numérises desdits courant et tension mésurés un traitement d'analyse pour déterminer la répartition de la consommation en fonction d'une partie au moins desdits équipements en fonction d'une signature de chacun desdits équipements, caractérisé en ce que ledit traitement d'analyse consiste à comparer la forme d'onde de courant mesurée à une bibliothèque de signatures préalablement enregistrées pour chacun desdits équipements électriques, lesdites signatures comportant au moins un paramètre fonction de la forme d'onde de la tension d'alimentation, la signature de chacun des équipements étant déterminée lors d'une étape préalable consistant à appliquer à chacun des équipements une série prédéterminée de séquences d'alimentation avec des signaux de tension dont la forme d'onde est représentative des formes d'onde observées sur les installations électriques usuelles et à enregistrer la forme d'onde de courant résultant du fonctionnement dudit équipement.

De préférence, la signature d'une partie au moins desdits équipements est fonction d'une combinaison de signatures des éléments électriques mis en oeuvre par l'équipement considéré.

Avantageusement, on procède en outre à un traitement prenant en compte le cycle d'activation des éléments électriques constitutifs de chacun des équipements considérés.

De préférence, une partie au moins des signatures comporte au moins un paramètre fonction de la forme d'onde de la tension d'alimentation observée.

Selon un mode de mise en oeuvre particulier, on associe à une partie au moins des équipements un catalogue de signatures, chacune des signatures dudit catalogue d'un équipement considéré prenant en compte la forme d'onde de tension du signal d'alimentation mesuré au moment de l'acquisition de la signature.

Selon un mode de mise en oeuvre préféré, le traitement d'analyse consiste à appliquer une première étape de calcul d'une transformée de Fourier Rapide sur les signaux de courant et de tension.

Avantageusement, le traitement d'analyse consiste à appliquer une deuxième étape de décomposition du résultat de la transformée de Fourier Rapide en fonction des signatures caractéristiques de chacun desdits équipements.

Selon une variante, le traitement d'analyse consiste à appliquer une étape additionnelle de validation des résultats de l'étape de décomposition consistant à vérifier la présence de variations temporelles dans formes d'onde de courant de chacun des éléments reconnus.

De préférence, le traitement d'analyse comporte une étape additionnelle d'association des éléments reconnus pour identifier les équipements concernés.

L'invention concerne également un procédé de modélisation des équipements en vue de la mise en oeuvre du procédé d'analyse précité caractérisé en ce que l'on alimente les différents éléments électriques constitutifs dudit équipement par une tension de forme d'onde de référence, et d'enregistrement de données numériques représentatives de la forme d'onde des signaux de tension et de courant mesurés.

De préférence, on enregistre pour chaque équipement un catalogue de signatures correspondant chacune à la forme d'onde des signaux de tension et de courant mesurés lors de l'alimentation avec une tension de forme d'onde différente.

### Exemple détaillé de réalisation

La présente invention sera mieux comprise à la lecture de la description qui suit d'un exemple non limitatif de réalisation, se référant aux dessins annexés où :
- la figure 1 représente une vue schématique d'une installation équipée d'un moyen d'analyse selon l'invention
- la figure 2 représente le diagramme des étapes mises en oeuvre par le procédé

### Présentation de l'installation

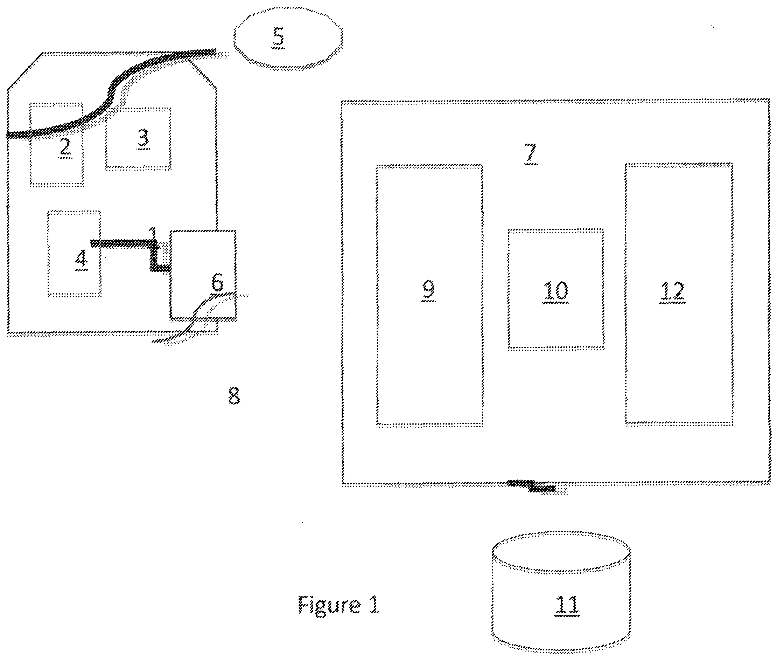

La figure 1 représente un exemple de mise en oeuvre de l'invention.

Le site (1) est constitué par exemple par un bâtiment d'habitation individuel ou collectif, un immeuble de bureau ou un bâtiment industriel, ou encore un parc regroupant plusieurs bâtiments.

Dans ce bâtiment sont implantés différents équipements électriques (2 à 4), par exemple un ordinateur, une lampe d'éclairage, un équipement électroménager, un équipement de chauffage ou de climatisation, etc...

Ces différents équipements sont branchés sur un réseau électrique privatif dont l'architecture est habituelle, ce réseau privatif étant lui-même relié au réseau électrique d'un distributeur d'énergie (5) par l'intermédiaire d'un poste de raccordement (6), par exemple un tableau général basse tension associé à un poste de livraison.

On installe dans ce poste de raccordement des capteurs de tension et de courant.

Sur chacune des phases d'alimentation, on installe des boucles de Rogowski qui fournissent un signal fonction du courant avec une grande précision.

Pour la mesure des tensions, on raccorde à chacune des phases un câble relié à l'outil d'analyse (7). L'outil d'analyse (7) est relié au poste de raccordement (6) par un faisceau de câbles (8) pour la transmission des formes d'onde des courants et tensions mesurées.

### Mesure de la tension

Sur un réseau monophasé (un conducteur de neutre et une phase) ou triphasé (trois phases et éventuellement un neutre), la tension est la grandeur électrique fournie par le distributeur d'Energie sur chaque phase. Chaque appareil électrique branché à une prise de courant y est soumis.

Afin de connaître l'environnement électrique du réseau observé, nous mesurons la forme d'onde de la tension sur chacune des phases. En effet, le comportement d'un appareil électrique varie en fonction de la tension à laquelle il est soumis.

L'information d'intérêt est la forme d'onde de la tension durant une période du signal (20 ms à 50 Hz, par exemple), appelée « période d'observation ». Cette forme d'onde de la tension, assimilable à une onde sinusoïdale ayant subi des perturbations tout au long du réseau reliant la centrale de production au poste de consommation, est acheminée vers une carte électronique puis acquise par un convertisseur analogique-numérique. Elle est ainsi représentée sous forme numérique. Le nombre d'échantillons par période et la profondeur de numérisation doivent être suffisamment grands pour permettre une restitution fidèle et un faible bruit de mesure. L'expérience montre la nécessité d'au moins 64 points par période et d'une profondeur de numérisation de 10 bits minimum.

### Mesure de l'intensité du courant

Chaque appareil connecté à un réseau électrique est soumis à une tension, et conséquemment, consomme un courant. Sur un réseau monophasé, ce courant parcourt le neutre et la phase ; sur un réseau triphasé équilibré, le courant parcourt les trois phases ; sur un réseau triphasé déséquilibré, le courant parcourt les trois phases et le neutre.

Partant du constat que les éléments constitutifs d'un appareil électrique influent sur les perturbations imprimées au courant qui le traverse, nous souhaitons mesurer précisément l'intensité de ce courant.

Pour ce faire, nous employons des capteurs de courant (un par phase) dont le rôle est de générer un signal image du courant qui parcourt un conducteur électrique. Plus précisément, nous utilisons des capteurs non-intrusifs appelés boucle de Rogowski qui se présentent sous la forme d'anneaux à placer autour des câbles d'alimentation d'une installation électrique. Ces anneaux étant ouverts, il n'est pas nécessaire de couper le courant pour les mettre en place.

L'information d'intérêt est la forme d'onde de l'intensité du courant durant une période du signal (20 ms à 50 Hz, par exemple), appelée « période d'observation ». Cette forme d'onde, assimilable à une onde sinusoïdale ayant subi des perturbations suite à son passage dans divers appareils électriques, est acheminée vers une carte électronique puis acquise par un convertisseur analogique-numérique. Elle est ainsi représentée sous forme numérique. Le nombre d'échantillons par période et la profondeur de numérisation doivent être suffisamment grands pour permettre une restitution fidèle et un faible bruit de mesure. L'expérience montre la nécessité d'au moins 64 points par période et d'une profondeur de numérisation de 10 bits minimum.

### Présentation de l'outil d'analyse

Le procédé d'analyse et de répartition de la consommation d'électricité nécessite une chaîne de mesure et d'acquisition performante des formes d'onde des tensions et des courants. Le dispositif (7) sur lequel repose ces étapes est composé des modules suivants.

Les signaux de formes d'onde de courant et de tension, mesurés au niveau du point de raccordement (6) et acheminés par le faisceau de câbles (8), sont numérisés de manière simultanée par des convertisseurs analogique-numérique (9) de haute précision et de faible bruit.

L'unité de traitement (10) réalise des opérations numériques sur les données mesurées et les compare à des références stockées dans une unité de stockage (11) selon le procédé décrit ci-après.

Les résultats ainsi obtenus sont mis à disposition d'appareils tiers ou d'opérateurs par le biais d'une unité de communication (12).

### Présentation du protocole de modélisation

Afin de garantir la robustesse des algorithmes mis en oeuvre, nous procédons avant toute analyse à la modélisation d'une pluralité d'appareils électriques. Le but de cette phase est de construire un catalogue de signatures correspondant à tous les appareils à identifier une fois sur site.

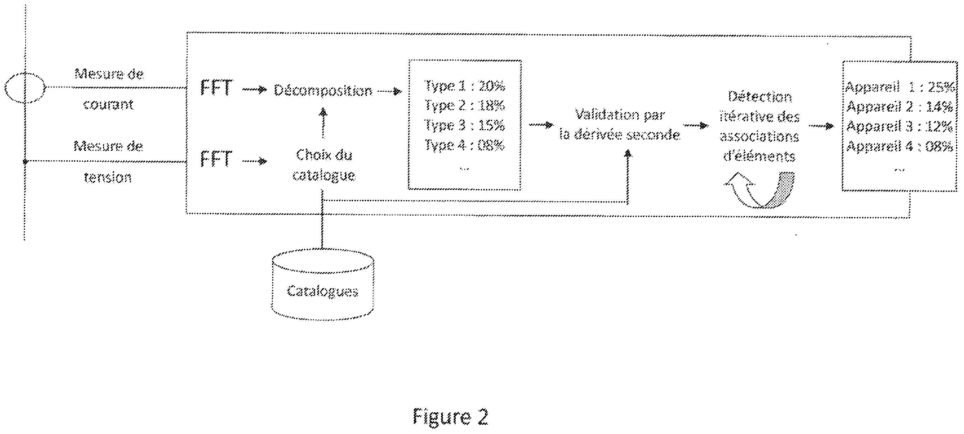

La figure 2 représente une vue schématique du procédé de modélisation. Un appareil électrique (2) est modélisé par une série de formes d'onde de courant capturées alors que l'appareil est alimenté par une série de formes d'onde de tension différentes.

Si cela est possible, on soumet l'appareil électrique à modéliser (2) à une série de formes d'onde de tension générées par une source de tension programmable (1) selon une distribution statistique des formes d'onde de tension habituellement rencontrées sur le site visé ou dans l'absolu. Pour chacune de ces formes d'onde de tension, on mesure grâce à une centrale d'acquisition (5) et à des capteurs de courant (3) et de tension (4) les forme d'onde de la tension d'alimentation et du courant consommé par l'appareil électrique. On stocke le couple de formes d'onde dans le catalogue (6).

Si l'appareil ne peut être alimenté par une source de tension programmable - par souci d'encombrement ou de puissance trop élevée - des mesures sont effectuées sur site sur un temps assez long pour observer des formes d'onde de tension suffisamment différentes.

Par défaut, si l'on ne dispose que d'une seule forme d'onde de courant associée à une seule forme d'onde de tension, on extrapole les résultats pour propager les variations de tension à la forme d'onde de courant.

### Présentation des traitements des signaux

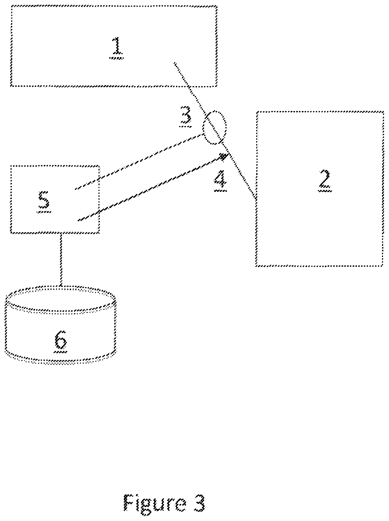

La figure 3 représente une vue schématique des traitements appliqués sur les signaux de courant et de tension mesurés à l'entrée du réseau d'alimentation du site ou d'une partie du site.

Le procédé de répartition de la consommation d'électricité repose sur l'analyse des formes d'onde de courant et de tension. Il se décompose en six phases : choix de la fenêtre d'observation, extraction des caractéristiques des signaux observés, sélection d'une série de signatures adaptées, décomposition des signaux observés en fonction des signatures, validation des résultats et agrégation temporelle des résultats.

D'abord, en raison du nombre de transitoires et d'artefacts qui peuvent se produire sur un réseau électrique de grande taille, une étape de débruitage doit être mise en oeuvre. Il s'agit de mesurer toutes les grandeurs physiques, tensions et intensités, sur un grand nombre de périodes, d'isoler celles qui présentent le moins de fluctuations et d'en calculer la moyenne. Nous procédons ainsi : mesure simultanée des formes d'onde de courant et de tension ; calcul des variations des formes d'onde successives ; sélection des périodes les plus semblables ; calcul des formes d'onde moyennes.

Puis, les signaux de tension et de courant débruités sont convertis dans l'espace des fréquences par application d'un algorithme de Transformée de Fourier Rapide (Fast Fourier Transform - FFT). L'expérience montre qu'il est souvent suffisant de ne considérer que les harmoniques impaires. On procède également à ce stage au calcul de la fonction dérivée seconde des formes d'onde de courant et à une opération de seuillage afin de ne conserver que les pics les plus importants. Le couple FFT - Dérivée seconde constitue l'ensemble des caractéristiques observées sur le réseau électrique.

La signature électrique d'un appareil étant fonction de la forme d'onde de la tension qui l'alimente, nous procédons à une sélection des signatures des appareils individuels précédemment modélisés qui correspondent au plus près à la situation rencontrée. Les premières harmoniques des tensions suffisent à déterminer la série de signatures à considérer pour la suite de l'algorithme.

On résout ensuite un problème d'optimisation dont le but est de déterminer les coefficients de l'équation reliant les valeurs des premières harmoniques des courants mesurés et les valeurs des premières harmoniques des courants de chacun des appareils électriques précédemment modélisés. On obtient ainsi un vecteur de nombres compris entre 0 et 1 représentant les parts relatives de présence de chaque appareil électrique précédemment modélisé.

La méthode développée ci-dessus étant sensible aux variations de phase - c'est-à-dire aux petits déplacements temporels des pics ou creux d'intensité caractéristiques de certains appareils - on procède à une vérification des résultats obtenus par une méthode appliquée aux formes d'onde de courant dans l'espace temporel. Il s'agit de vérifier la présence des pics et creux de courant caractéristiques de certains appareils électriques en comparant leur position - ou leur déphasage - et leur amplitude relative. On utilise pour cela les pics de la dérivée seconde des signaux de courant. Par exemple, si l'optimisation détermine qu'il existe 30% d'ordinateurs, et qu'un ordinateur seul est caractérisé par un pic de dérivée seconde d'amplitude normée valant 32 et en positions 45° et 225° (premier quart de chaque demi-période), alors on va vérifier qu'il existe bien des pics au sein de la forme d'onde d'intensité, d'amplitude approximative 30% * 32 = 10 et aux positions 45° et 225°.

Les résultats obtenus par l'analyse instantanée des formes d'onde de courant représentent la consommation des éléments électriques modélisés mais ne permettent pas d'identifier des appareils électriques à fonctionnement complexe ou cyclique. Pour atteindre cet objectif, nous étudions également l'évolution temporelle des résultats de l'optimisation sur plusieurs secondes à plusieurs heures pour détecter des motifs temporels récurrents qui pourront être groupés. Pour ce faire, nous nous basons sur la comparaison de deux résultats successifs de l'algorithme précédent. On observe les variations et on incrémente le poids de chaque combinaison - par exemple 20% moteur et 80% résistance chauffante. Au-delà d'un certain seuil, les combinaisons seront considérées comme étant des appareils à part entière.

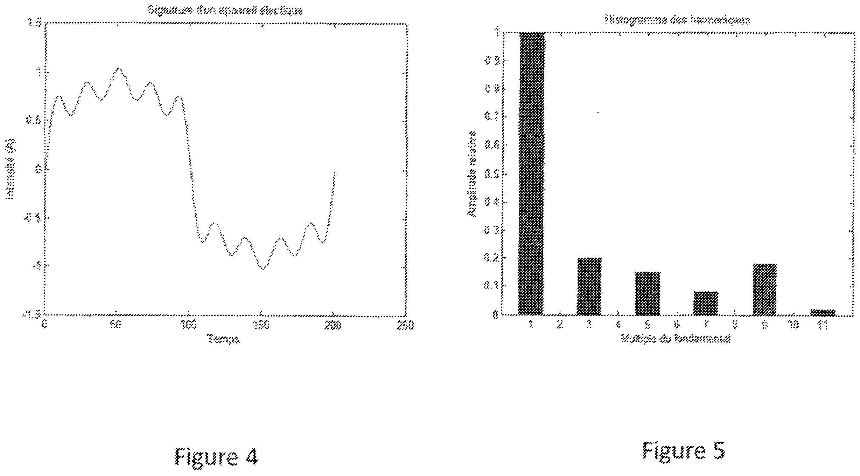

Les figures 4 et 5 représentent les formes d'onde, représentative d'un appareil électrique, respectivement la variation temporelle de l'intensité mesurée lors du fonctionnement d'un appareil électrique, et l'histogramme des harmoniques résultant de l'application d'un transformé de Fourier Rapide au signal de courant illustré par la figure 4.

La signature est constituée à titre d'exemple des paramètres suivants :
- la partie réelle des harmoniques successives des signaux de courant
- la partie imaginaire des harmoniques successives des signaux de courant
- les pics de la dérivée seconde des signaux de courant.

Ces paramètres permettent de prendre en compte les caractéristiques fréquentielles et temporelles du courant.

Ces paramètres sont à la fois stable et reproductibles, et différenciant des éléments électriques constitutifs des équipements.

## Revendications

1. Procédé d'analyse de la consommation d'électricité d'un site équipé d'une pluralité d'équipements électriques de natures différentes, consistant à mesurer périodiquement le courant et la tension sur au moins une des phases électriques en amont du réseau d'alimentation du site, à appliquer sur une combinaison des signaux numérisés desdits courant et tension mésurés un traitement d'analyse pour déterminer la répartition de la consommation en fonction d'une partie au moins desdits équipements en fonction d'une signature de chacun desdits équipements, **caractérisé en ce que** ledit traitement d'analyse consiste à comparer la forme d'onde de courant mesurée à une bibliothèque de signatures préalablement enregistrée pour chacun desdits équipements électriques, lesdites signatures comportant au moins un paramètre fonction de la forme d'onde de la tension d'alimentation, la signature de chacun des équipements étant déterminée lors d'une étape préalable consistant à appliquer à chacun des équipements une série prédéterminée de séquences d'alimentation avec des signaux de tension dont la forme d'onde est représentative des formes d'onde observées sur les installations électriques usuelles et à enregistrer la forme d'onde de courant résultant du fonctionnement dudit équipement.

2. Procédé d'analyse de la consommation d'électricité d'un site équipé selon la revendication 1, **caractérisé en ce que** la signature d'une partie au moins desdits équipements est fonction d'une combinaison de signatures des éléments électriques mis en oeuvre par l'équipement considéré.

3. Procédé d'analyse de la consommation d'électricité d'un site selon la revendication 2 **caractérisé en ce que** l'on procède en outre à un traitement prenant en compte le cycle d'activation des éléments électriques constitutifs de chacun des équipements considérés.

4. Procédé d'analyse de la consommation d'électricité d'un site selon la revendication principale **caractérisé en ce que** le traitement d'analyse consiste à appliquer une première étape de calcul d'une transformée de Fourier Rapide sur les signaux de courant et de tension.

5. Procédé d'analyse de la consommation d'électricité d'un site selon la revendication précédente **caractérisé en ce que** le traitement d'analyse consiste à appliquer une deuxième étape de décomposition du résultat de la transformée de Fourier Rapide en fonction des signatures caractéristiques de chacun desdits équipements.

6. Procédé d'analyse de la consommation d'électricité d'un site selon la revendication 5 **caractérisé en ce que** le traitement d'analyse consiste à appliquer une étape additionnelle de validation des résultats de l'étape de décomposition consistant à vérifier la présence de variations temporelles des formes d'onde de courant de chacun des éléments reconnus.

7. Procédé d'analyse de la consommation d'électricité d'un site selon l'une au moins des revendications 4 à 6 **caractérisé en ce que** le traitement d'analyse comporte une étape additionnelle d'association des éléments reconnus pour identifier les équipements concernés.

8. Procédé de modélisation des équipements en vue de la mise en oeuvre du procédé d'analyse selon l'une au moins des revendications précédentes, **caractérisé en ce que** l'on alimente les différents éléments électriques constitutifs dudit équipement par une tension de forme d'onde de référence, et d'enregistrement de données numériques représentatives de la forme d'onde des signaux de tension et de courant mesurés.

9. Procédé de modélisation des équipements en vue de la mise en oeuvre du procédé d'analyse selon la revendication précédente **caractérisé en ce que** l'on enregistre pour chaque équipement un catalogue de signatures correspondant chacune à la forme d'onde des signaux de tension et de courant mesurés lors de l'alimentation avec une tension de forme d'onde différente.

## Patentansprüche

1. Verfahren zur Analyse des Stromverbrauchs an einem Standort, der mit mehreren elektrischen Geräten unterschiedlicher Art ausgestattet ist, darin bestehend, den Strom und die Spannung an mindestens einer der elektrischen Phasen stromaufwärts des Standortstromnetzes regelmäßig zu messen, und eine Analyseverarbeitung auf eine Kombination von digitalisierten Zeichen dieser Strom- und Spannungsmessungen anzuwenden, um die Aufteilung des Verbrauchs unter Berücksichtigung von mindestens einem Teil besagter Geräte im Hinblick auf eine Signatur jedes der Geräte zu bestimmen, **dadurch gekennzeichnet, dass** besagte Analyseverarbeitung darin besteht, bei jedem der besagten Geräte die Form der gemessenen Stromwelle mit einer vorab gespeicherten Signaturbibliothek zu vergleichen, wobei besagte Signaturen mindestens einen Funktionsparameter der Wellenform der Versorgungsspannung enthalten, und die Signatur der einzelnen Geräte in einem vorhergehenden Schritt bestimmt wird, wobei dieser darin besteht, auf jedes Gerät eine bestimmte Reihe von Versorgungssequenzen mit Spannungssignalen anzuwenden, deren Wellenform repräsentativ für die an den herkömmlicherweise benutzten elektrischen Installationen beobachteten Wellenformen sind, und darin, die aus dem Betrieb besagten Gerätes resultierende Stromwellenform zu registrieren.

2. Verfahren zur Analyse des Stromverbrauchs an einem mit Geräten ausgerüsteten Standort nach Anspruch 1, **dadurch gekennzeichnet, dass** die Signatur von mindestens einem Teil besagter Geräte von der Kombination von Signaturen der am betreffenden Gerät eingesetzten elektrischen Elemente abhängt.

3. Verfahren zur Analyse des Stromverbrauchs an einem mit Geräten ausgerüsteten Standort nach Anspruch 2, **dadurch gekennzeichnet, dass** eine Verarbeitung statt findet, bei welcher der Aktivierungszyklus der elektrischen Elemente, die die jeweiligen Geräte bilden, berücksichtigt wird.

4. Verfahren zur Analyse des Stromverbrauchs eines mit Geräten ausgerüsteten Standorts nach dem Hauptanspruch, **dadurch gekennzeichnet, dass** die Analyseverarbeitung darin besteht, in einem ersten Rechenschritt eine schnelle Fouriertransformierte auf die Strom- und Spannungssignale anzuwenden.

5. Verfahren zur Analyse des Stromverbrauchs an einem Standort nach dem vorhergehenden Anspruch, **dadurch gekennzeichnet, dass** bei der Analyseverarbeitung als zweiter Schritt das Ergebnis der schnellen Fouriertransformierten entsprechend den Signaturen, die charakteristisch für besagte Geräte sind, zerlegt wird.

6. Verfahren zur Analyse des Stromverbrauchs an einem Standort nach Anspruch 5, **dadurch gekennzeichnet, dass** die Analyseverarbeitung darin besteht, einen zusätzlichen Schritt für die Bestätigung der Ergebnisse des Zerlegungsschritts anzuwenden, wobei dieser darin besteht, das Vorhandensein von zeitlichen Änderungen der Stromwellenform bei jedem der anerkannten Elemente zu überprüfen.

7. Verfahren zur Analyse des Stromverbrauchs an einem Standort nach mindestens einem der Ansprüche 4 bis 6, **dadurch gekennzeichnet, dass** die Analyseverarbeitung einen zusätzlichen Schritt enthält, bei dem anerkannte Elemente miteinander verknüpft werden, um die betreffenden Geräte zu identifizieren.

8. Verfahren zur Modellierung der Geräte im Hinblick auf die Anwendung des Analyseverfahrens nach mindestens einem der vorhergehenden Ansprüche, **dadurch gekennzeichnet, dass** man die unterschiedlichen elektrischen Elemente besagten Geräts mit einer Spannung mit Bezugswellenlänge versorgt, und zur Registrierung der digitalen Daten, die für die Wellenform der gemessenen Spannungs- und Stromsignale repräsentativ ist.

9. Verfahren zur Modellierung von Geräten im Hinblick auf die Anwendung des Analyseverfahrens nach dem vorhergehenden Anspruch, **dadurch gekennzeichnet, dass** man für jedes Gerät einen Katalog an Signaturen registriert, von der jede der Wellenform der bei der Versorgung mit einer Spannung mit unterschiedlicher Wellenform gemessenen Spannungs- und Stromsignale entspricht.

## Claims

1. A method for analyzing the electricity consumption of a site provided with a plurality of electrical devices of different types, consisting in periodically measuring the current and the voltage over at least one of the electrical phases upstream from the power supply network of the site, in applying to a combination of digitized signals of said measured current and voltage an analysis processing in order to determine the distribution of the consumption on the basis of at least some of said devices in accordance with a signature of each of said devices, **characterized in that** said analysis processing consists in comparing the waveform of the measured current with a library of previously recorded signatures for each one of said electrical devices, with said signatures comprising at least one parameter based on the waveform of the supply voltage, with the signature of each device being determined during a prior step consisting in applying, to each device, a predetermined series of power supply sequences with voltage signals, the waveform of which is representative of the waveforms observed on ordinary electrical facilities and in recording the current waveform resulting from the operation of said device.

2. A method for analyzing the electricity consumption of a site provided according to claim 1, **characterized in that** the signature of at least a part of said devices is based on a combination of signatures of the electrical elements implemented by the considered device.

3. A method for analyzing the electricity consumption of a site according to claim 2, **characterized in that** a processing taking into account the activation cycle of the electrical elements composing each one of the considered devices is executed.

4. A method for analyzing the electricity consumption of a site according to the main claim, **characterized in that** the analysis processing consists in applying a first step of computing a Fast Fourier Transform on the current and voltage signals.

5. A method for analyzing the electricity consumption of a site according to the preceding claim, **characterized in that** the analysis processing consists in applying a second step of decomposing the result of the Fast Fourier transform based on the characteristic signatures of each one of said devices.

6. A method for analyzing the electricity consumption of a site according to claim 5, **characterized in that** the analysis processing consists in applying an additional step of validating the results of the decomposition step which consists in checking the presence of time variations of the current waveforms of each one of the elements recognized.

7. A method for analyzing the electricity consumption of a site according to at least one of claims 4 to 6, **characterized in that** the analysis processing includes an additional step of associating the recognized elements to identify the devices concerned.

8. A method for modelling the devices for implementing the analysis method according to at least one of the preceding claims, **characterized in that** the various electrical devices composing said electrical devices are supplied with a reference waveform voltage, and for recording digital data representative of the waveform of the measured voltage and current signals.

9. A method for modelling the devices for implementing the analysis method according to the preceding claim, **characterized in that**, for each device, a catalogue of signatures is recorded, with each signature corresponding to the waveform of the measured voltage and current signals when supplying with a voltage having a different waveform.
